(19) **Europäisches Patentamt**

**European Patent Office**

**Office européen des brevets**

(11) **EP 0 703 064 B1**

(12) **EUROPÄISCHE PATENTSCHRIFT**

(45) Veröffentlichungstag und Bekanntmachung des Hinweises auf die Patenterteilung:
**10.01.2001   Patentblatt 2001/02**

(51) Int Cl.⁷: **B29C 69/00**, B29C 65/02, B65D 8/00

(21) Anmeldenummer: **95114349.4**

(22) Anmeldetag: **13.09.1995**

(54) **Verfahren zum Rekonditionieren von genormten Spundfässern aus Kunststoff**

Process for reconditioning normed plastic drums with screw caps

Procédé pour le reconditionnement de fûts à bonde normalisés, en matière plastique

(84) Benannte Vertragsstaaten:
**AT BE CH DE DK ES FR GB GR IE IT LI LU MC NL PT SE**
Benannte Erstreckungsstaaten:
**LT LV SI**

(30) Priorität: **20.09.1994   DE 4433418**

(43) Veröffentlichungstag der Anmeldung:
**27.03.1996   Patentblatt 1996/13**

(73) Patentinhaber: **Schütz GmbH & Co. KGaA**
**56242 Selters / Ww. (DE)**

(72) Erfinder: **Schütz, Udo**
**D-56242 Selters / Ww. (DE)**

(74) Vertreter: **Pürckhauer, Rolf, Dipl.-Ing.**
**Am Rosenwald 25**
**57234 Wilnsdorf (DE)**

(56) Entgegenhaltungen:
| | |
|---|---|
| **EP-A- 0 169 736** | **EP-A- 0 210 679** |
| **EP-A- 0 254 563** | **EP-A- 0 302 266** |
| **DE-A- 4 220 339** | **DE-C- 4 242 370** |
| **DE-U- 9 218 003** | **FR-A- 1 117 219** |
| **GB-A- 2 052 321** | **US-A- 2 943 386** |
| **US-A- 3 510 932** | **US-A- 3 660 188** |
| **US-A- 5 205 885** | |

**Beschreibung**

Die Erfindung betrifft ein Verfahren zum Rekonditionieren von genormten Spundfässern aus Kunststoff, die einteilig durch Blasformen hergestellt sind oder aus einem blasgeformten Faßkörper mit einem aufgeschweißten, spritzgegossenen, oberen Faßboden bestehen, für einen erneuten Einsatz als Spundfässer oder für eine Verwendung als Weithalsfässer, wobei die rekonditionierten Spund- und Weithalsfässer ein gleiches Nennvolumen sowie gleiche Höhen- und Durchmessermaße nach DIN Norm aufweisen.

Die strengen gesetzlichen Umweltschutzvorschriften erfordern den Übergang von Einweg- auf Mehrweggebinde wie beispielsweise Fässer aus Kunststoff oder Stahl, die Umstellung auf Gebinde mit größerem Volumen mit dem Ziel einer Verringerung der Restmengen und die Entwicklung neuer Mehrweggebinde, die im Hinblick auf eine Entlastung der Umwelt von schädlichen Stoffen rekonditioniert und für die Rekonditionierung sowie für eine ordnungsgemäße Entsorgung durch eine schadstofffreie Vernichtung z.B. durch Verbrennen oder für eine Wiederaufbereitung des Herstellungsmaterials optimal restentleert und leicht gereinigt werden können.

Die Entwicklung von rekonditionierbaren und entsorgungsfreundlichen, gegen eine Kontaminierung durch Schadstoffe geschützten Hartgebinden, im wesentlichen Fässern aus Kunststoff und Stahl, führte zu den gattungsgemäßen Spundfässern und z.B. aus der DE 35 39 656 A1 bekannten Deckelspundfässern, die zum Teil die bisher eingesetzten geschlossenen Spundfässer ersetzen. Diese Fässer werden nach Bedarf mit einer als Inliner bezeichneten flexiblen Innenhülle bzw. einem Sack aus einer Kunststoffolie, z.B. einer Polyethylenfolie, oder aus einer diffusionsfesten, koextrudierten Metall-Kunststoffverbundfolie, z.B. einer beidseitig mit Polyethylen kaschierten Aluminiumfolie ausgestattet. Fässer mit einem Inliner sind z.B. aus der DE 88 10 760 U1 bekannt. Die Inliner finden bei Kunststoff- und Stahlfässern Anwendung, wenn in diese entsorgungsproblematische Produkte wie Dispersionen, z.B. Farben, gefüllt werden, die nach dem Trocknen kaum mehr von der Faßwand zu entfernen sind. Inliner aus einer diffusionsfesten Verbundfolie unterbinden bei Kunststofffässern die Diffusion von lösungsmittelhaltigem Füllgut in die Faßwand und eine mögliche Rückdiffusion von Lösungsmitteln aus der Faßwand. Bei Stahlfässern erspart der Inliner die bisher zum Schutz des Stahlblechs gegen aggressive Medien und Korrosion erforderliche Innenlackierung.

Aus der DE 42 42 370 C1 ist ein Verfahren zum Rekonditionieren von Spundfässern mit einem blasgeformten Weithalsfaßkörper mit einer Faßbordur und einem auf die Faßbordur mit einem Flansch aufgeschweißten, spritzgegossenen Spunddeckel für einen erneuten Einsatz als geschlossene Spundfässer oder für eine Weiterverwendung als Weithalsfässer mit abnehmbarem Deckel bekannt.

Die Einziehung des für ein Spundfaß mit einem Nennvolumen von beispielsweise 220 Litern verwendeten Weithalsfaßkörpers im Halsbereich, die für eine Anordnung der Faßbordur innerhalb der Kontur des Faßkörpers erforderlich ist, bedingt gegenüber einem Spundfaß mit gleichem Nennvolumen nach der DIN 6131, dessen annähernd durchgehend zylindrischer Faßkörper den gleichen Durchmesser wie der Weithalsfaßkörper aufweist, eine größere Faßhöhe gegenüber dem genormten Spundfaß, um das Nennvolumen von 220 Litern zu erhalten.

Aus diesen unterschiedlichen Faßhöhen ergibt sich der Nachteil, daß eine gemischte Stapelung von Spundfässern mit einem Weithalsfaßkörper und einem aufgeschweißten Spunddeckel sowie von Weithalsfässern mit einem abnehmbaren Deckel nach der DE 42 42 370 C1 und von einteilig geblasenen Spundfässern gemäß der DIN 6131 für einen Transport mittels genormter Container sowie für Lagerzwecke nicht möglich ist.

Der Erfindung liegt die Aufgabe zugrunde, ein Verfahren zum Rekonditionieren von gebrauchten Spundfässern aus Kunststoff nach DIN Norm, die einteilig durch Blasformen hergestellt sind oder aus einem blasgeformten Faßkörper mit einem aufgeschweißten, spritzgegossenen, oberen Boden bestehen, für einen erneuten Einsatz als Spundfässer oder für eine Weiterverwendung als Weithalsfässer zu entwickeln, wobei die rekonditionierten Spund- und Weithalsfässer ein gleiches Nennvolumen und gleiche Höhen- und Durchmessermaße nach DIN Norm im Hinblick auf eine gemischte Stapelbarkeit zu Transport- und Lagerzwecken aufweisen sollen.

Diese Aufgabe ist erfindungsgemäß gelöst durch ein Rekonditionierverfahren mit den Merkmalen des Patentanspruchs 1.

Die Unteransprüche beinhalten vorteilhafte und zweckmäßige Weiterentwicklungen des erfindungsgemäßen Rekonditionierverfahrens.

Das erfindungsgemäße Verfahren eröffnet die Möglichkeit zu einer kostengünstigen Rekonditionierung von den höchsten Sicherheitsanforderungen für flüssiges Gefahrengut genügenden, gebrauchten Spundfässern nach DIN Norm und zu einer preisgünstigen Umrüstung von genormten Spundfässern zu Weithalsfässern mit abnehmbarem einfachem Deckel oder Spunddeckel mit einem Spannringverschluß für den Transport und die Lagerung von flüssigen, granulat- und pulverförmigen Gütern, die in niedrigere Gefahrenklassen eingestuft sind. Aufgrund gleicher Höhen- und Durchmessermaße können die rekonditionierten Spund- und Weithalsfässer zu Transport- und Lagerzwecken gemischt gestapelt werden.

Das erfindungsgemäße Verfahren zum Rekonditionieren von gebrauchten Spundfässern nach DIN Norm ist nachstehend anhand schematischer Zeichnungen erläutert.

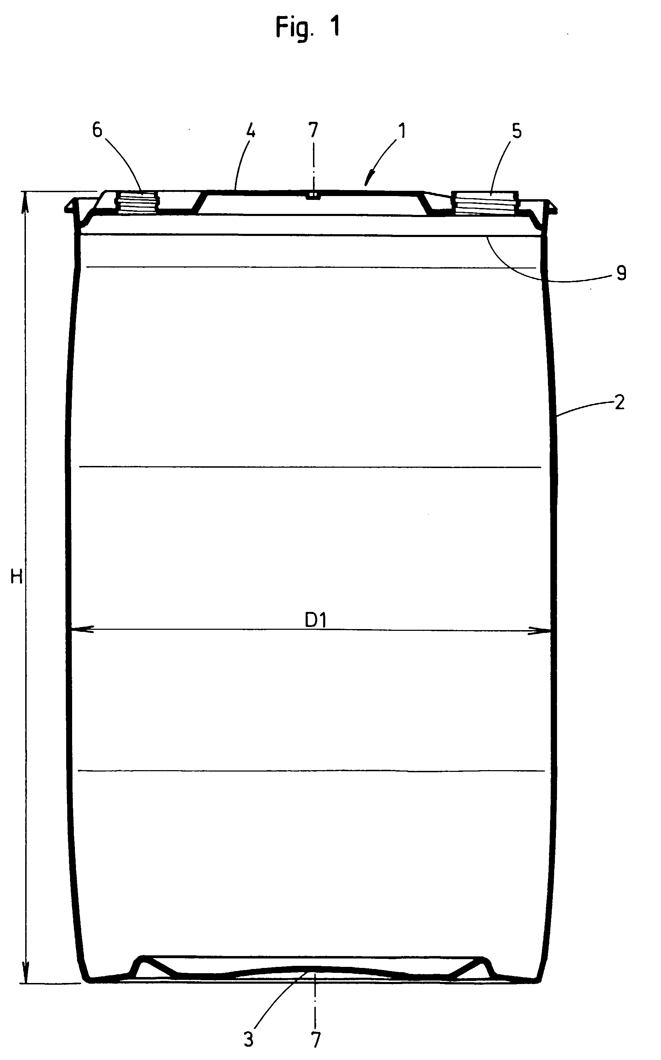

Das gebrauchte Spundfaß 1 nach DIN 6131 aus thermoplastischem Kunststoff, z.B. Polyethylen, nach Fig. 1, das gemäß dem nachfolgend beschriebenen Verfahren zur Weiterverwendung als Weithalsfaß rekonditioniert wird, weist einen Faßkörper 2 und einen unteren Boden 3 auf, die einteilig blasgeformt sind, sowie einen auf den Faßkörper 2 aufgeschweißten oberen Boden 4 mit einem Einfüll- und Entnahmespund 5 und einem Be- und Entlüftungsspund 6.

Das genormte Spundfaß 1 mit einem Nennvolumen von beispielsweise 220 Litern hat einen Faßkörperdurchmesser D1 von 581 Millimetern mit einer Toleranz von ± 3 Millimeter und eine Höhe H von 935 Millimetern mit einer Toleranz von $\pm {}^{5}_{0}$ Millimeter.

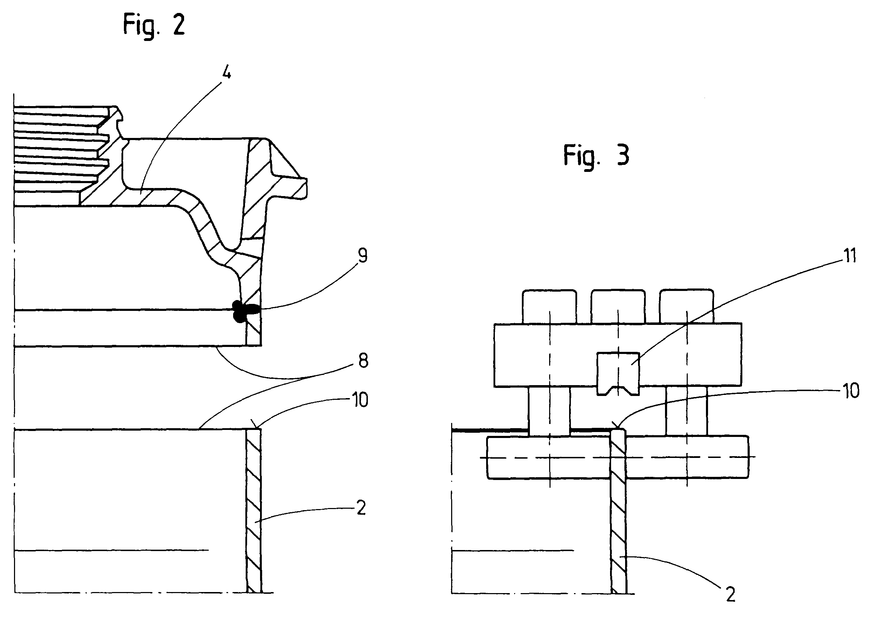

Zu Beginn des Rekonditionierverfahrens wird der obere Faßboden 4 quer zur Faßlängsachse 7-7 vom Faßkörper 2 des Spundfasses 1 maschinell abgetrennt, wobei der Trennschnitt 8 unterhalb der Schweißnaht 9 zwischen Faßkörper 2 und oberem Faßboden 4 gelegt wird (Fig. 2).

Nunmehr wird der durch das Abtrennen des oberen Bodens 4 gebildete ringförmige Schnittrand 10 des Faßkörpers 2 mit einem Messer 11 oder einem nicht dargestellten Fräswerkzeug glatt geschält bzw. gefräst, wobei entweder das Werkzeug auf dem Schnittrand umläuft oder der Faßkörper mit dem Schnittrand unter dem Werkzeug rotiert (Fig. 3).

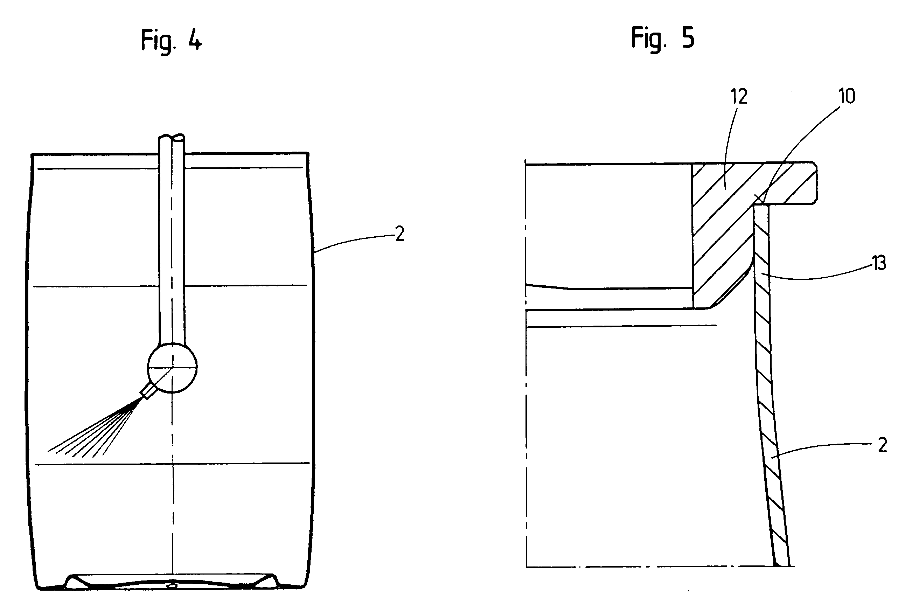

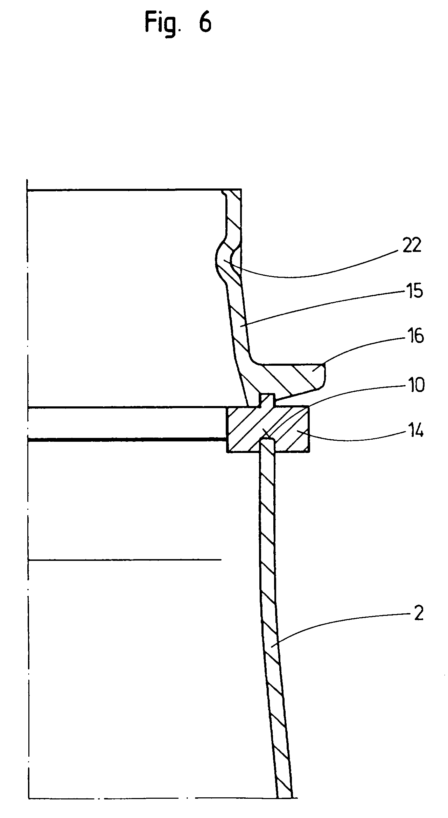

Danach wird der Faßkörper 2 gereinigt (Fig. 4).

Anschließend wird der Schnittrand 10 des gereinigten Faßkörpers 2 kalibriert. Dazu wird der Faßkörper 2 mit dem für eine Schweißung bearbeiteten Schnittrand 10 auf einen Kalibrierdorn 12 aufgeschoben und im Bereich des Schnittrandes 10 erhitzt, derart, daß der Faßkörper 2 beim anschließenden Abkühlen mit dem Schnittrandabschnitt 13 paßgenau auf den Kalibrierdorn 12 aufgeschrumpft wird (Fig. 5).

Darauffolgend wird der Faßkörper 2 von dem Kalibrierdorn 12 abgezogen, und auf den kalibrierten Schnittrand 10 des Faßkörpers 2 wird mittels eines Heizspiegels 14 ein spritzgegossener Halsring 15 aus Kunststoff mit einer am unteren Rand radial nach außen vorstehenden, umlaufenden Bordur 16 zur Herstellung eines Weithalsfasses 17 aufgeschweißt, deren Durchmesser D2 kleiner ist als der Durchmesser D1 des Faßkörpers 2 (Fig. 6).

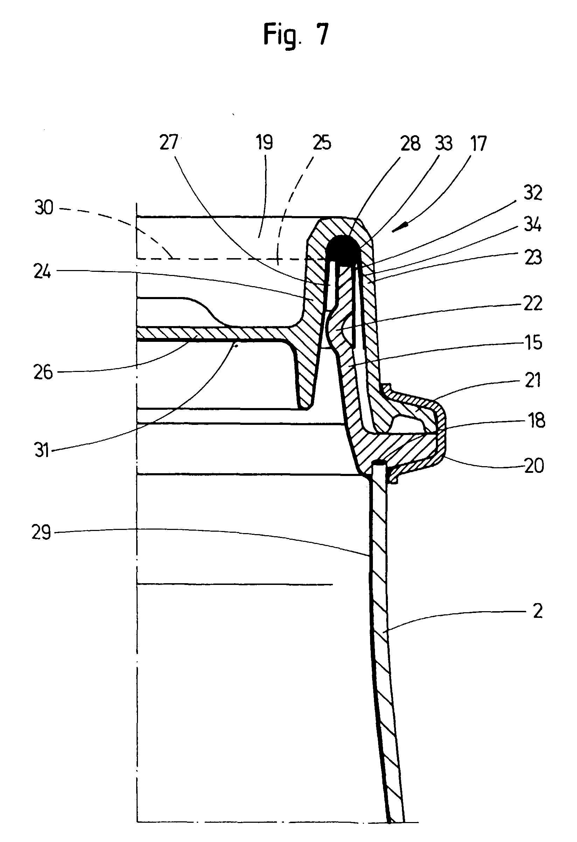

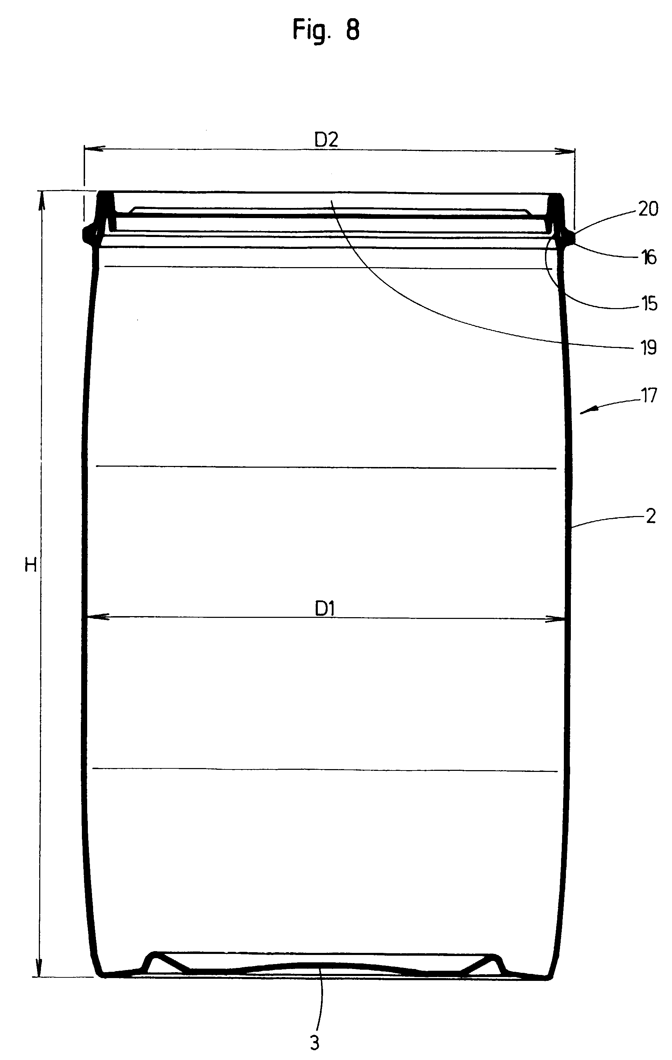

Nach dem Glätten der Schweißnaht 18 zwischen dem Faßkörper 2 und dem Halsring 15 mit einem Fräs- oder Schälwerkzeug und einer Dichtheitsprüfung des Faßkörpers 2 wird auf dem Halsring 15 ein spritzgegossener Weithalsfaßdeckel 19 mit einem Spannring 20 befestigt, der einen am unteren Rand des Faßdeckels 19 angeformten Deckelflansch 21 übergreift und die Bordur 16 des Halsringes 15 untergreift (Fign. 7 und 8).

Anstatt mit einem einfachen Weithalsfaßdeckel 19 kann das Weithalsfaß 17 auch mit einem abnehmbaren Spunddeckel verschlossen werden.

Der auf den Faßkörper 2 aufgeschweißte Halsring 15 weist über den Umfang verteilte Sicken 22 zur Versteifung und zur Abstützung des Weithalsfaßdeckels 19 auf, der einen den Halsring 15 umschließenden Außenrand 23 und einen in den Halsring 15 eintauchenden Innenrand 24 besitzt, der über den unterhalb der Faßöffnung 25 gelegenen Deckelboden 26 vorsteht. Außenrand 23 und Innenrand 24 des Weithalsfaßdeckels 19 bilden einen Ringraum 27, in dessen Grund eine Zweikomponenten-Dichtungsmasse, z.B. Polyurethan mit Härter, eingespritzt ist, die einen Dichtring 28 bildet.

Vor dem Aufsetzen des Weithalsfaßdeckels 19 auf den auf den Faßkörper 2 aufgeschweißten Halsring 15 kann ein Foliensack bzw. Inliner 29 aus einer Kunststoffolie, z.B. einer Polyethylenfolie, in den Faßkörper 2 eingelegt und über den Öffnungsrand 30 des Weithalsfasses 17 gezogen werden, so daß der Inliner 29 zwischen dem Öffnungsrand 30 und dem Dichtring 28 eingeklemmt wird.

Zum Schutz gegen in den Inliner 29 eingefülltes flüssiges Füllgut kann der Deckel 19 mit einer Innenauskleidung 31 aus einer Metall-Kunststoffverbundfolie ausgestattet sein. Die Innenauskleidung 31 wird als Scheibe z.B. aus einer einseitig mit Polyethylen kaschierten Aluminiumfolie vorgefertigt, und die Scheibe wird unter Anpassung an die Deckelkontur derart in den Weithalsfaßdeckel 19 eingelegt, daß die Aluminiumfolie an der Deckelinnenseite anliegt. Zur Unterstützung der Haftwirkung, die durch die Einformung der Scheibe aus einer Metall-Kunststoffverbundfolie in den Deckel 19 zwischen diesem und der geformten Innenauskleidung 31 auftritt, kann die Innenauskleidung stellenweise mit der Deckelinnenseite verschweißt oder verklebt werden.

Nach dem Füllen des Fasses 17 mit einer Flüssigkeit und dem Schließen des Faßdeckels 19 mittels des Spannringes 20 werden der über den Öffnungsrand 30 des Fasses 17 nach außen umgeschlagene obere Rand 32 des Inliners 29 und die Innenauskleidung 31 des Deckels 19 im Bereich des Öffnungsrandes 30 durch Induktionsschweißung z.B. mit einer elektrischen Hochfrequenzspule umlaufend miteinander verschweißt. Durch die Verschweißung bilden Inliner 29 und Innenauskleidung 31 eine flüssigkeitsdichte Innenhülle, die gewährleistet, daß bei einem Lockern, Lösen oder Abspringen des Spannringes 20 und einem dadurch bewirkten Lockern des Deckels 19 durch äußere Krafteinwirkung beim Fall oder Umstürzen des Fasses keine Flüssigkeit ausläuft.

Zum Entleeren des Fasses 17 wird zunächst der Deckel 19 abgenommen, wobei sich die mit dem Inliner 29 verschweißte Innenauskleidung 31 aus dem Deckel 19 herauslöst. Danach werden Innenauskleidung 31 und Inliner 29 entlang des Öffnungsrandes 30 aufgeschnitten, so daß das flüssige Füllgut aus dem Faß 17 entleert werden kann.

Für den erneuten Einsatz des Weithalsfasses 17 wird der Inliner 29 aus dem Faß herausgenommen, ggf. am Öffnungsrand 30 anhaftende Folienreste des Inliners 29 werden abgekratzt, und es wird ein neuer Inliner 29 in das Faß 17 und eine neue Innenauskleidung 31 in den Deckel 19 eingelegt.

In Abänderung des beschriebenen Weithalsfasses 17 können die Innenauskleidung 31 des Deckels 19 und der Inliner 29 aus einer Metall-Kunststoffverbundfolie, z.B. einer einseitig mit Polyethylen kaschierten Aluminiumfolie hergestellt sein, wobei die Aluminiumfolie der Innenauskleidung 31 an dem Deckel 19 und die Aluminiumfolie des Inliners 29 am Faßkörper 2 anliegt. Bei dieser Faßausführung kann der Inliner 29 leicht aus dem Faß 17 entnommen werden, da er nicht mit dem Öffnungsrand 30 des Fasses verschweißt ist.

Bei einer weiteren Weithalsfaßausführung bestehen Inliner 29 und Innenauskleidung 31 des Deckels 19 aus einer Kunststoffolie, z.B. einer Polyethylenfolie. In den Ringraum 27 zwischen Deckelaußenrand 23 und Deckelinnenrand 24 ist zwischen dem Dichtring 28 und der Innenauskleidung 31 des Deckels 19 ein dünner Metallring 33, z.B. ein Aluminiumring, mit einem U-Profil eingelegt, und auf den Öffnungsrand 30 des Fasses 17 ist ein weiterer Ring 34 aus Aluminium mit einem U-Profil aufgesetzt, auf dem der nach außen umgeschlagene obere Rand 32 des Inliners 29 aufliegt. Ggf. kann der auf den Öffnungsrand 30 des Fasses 17 aufgesetzte Aluminiumring 34 entfallen.

Das nach dem vorbeschriebenen Verfahren aus einem Spundfaß 1 nach der DIN 6131 mit einem Nennvolumen von beispielsweise 220 Litern rekonditionierte Weithalsfaß 17 weist bei gleichem Nennvolumen den Normduchmesser D1 von 581 Millimetern $\pm 3$ Millimeter und die Normhöhe H von 935 Millimetern $\pm \frac{5}{0}$ Millimeter des genormten Spundfasses 1 auf.

Bei einer Rekonditionierung des Spundfasses 1 für eine Weiterverwendung als Spundfaß wird nach dem Abtrennen des oberen Bodens 4 vom Faßkörper 2 auf den kalibrierten Schnittrand 10 des Faßkörpers ein neuer oberer Boden 4 mit einem Einfüll- und Entnahmespund 5 und einem Be- und Entlüftungsspund 6 aufgeschweißt.

Einteilig durch Blasformen hergestellte Spundfässer können ebenfalls nach dem vorstehend erläuterten Verfahren rekonditioniert werden.

**Patentansprüche**

1. Verfahren zum Rekonditionieren von genormten Spundfässern aus Kunststoff, die einteilig durch Blasformen hergestellt sind oder aus einem blasgeformten Faßkörper mit einem aufgeschweißten, spritzgegossenen, oberen Boden bestehen, für einen erneuten Einsatz als Spundfässer oder für eine Verwendung als Weithalsfässer, wobei die rekonditionierten Spund- und Weithalsfässer ein gleiches Nennvolumen sowie gleiche Höhen- und Durchmessermaße nach DIN Norm aufweisen, gekennzeichnet durch folgende Merkmale:

   a) Maschinelles Abtrennen des oberen Faßbodens (4) quer zur Faßlängsachse (7-7) vom Faßkörper (2), wobei bei Spundfässern (1) mit angeschweißtem oberen Boden (4) der Trennschnitt (8) unterhalb der Schweißnaht (9) gelegt wird;

   b) Bearbeiten des ringförmigen Schnittrandes (10) des Faßkörpers (2) zum Herstellen einer glatten Schweißfläche;

   c) Reinigen des Faßkörpers (2);

   d) Kalibrieren des Schnittrandes (10) des Faßkörpers (2);

   e 1) Aufschweißen eines oberen Bodens (4) mit einem Einfüll- und Entnahmespund (5) sowie einem Be- und Entlüftungsspund (6) auf den kalibrierten Schnittrand (10) des Faßkörpers (2) zur Herstellung von Spundfässern (1), Glätten der Schweißnaht und Dichtheitsprüfung des Spundfasses (1);

   e 2) Aufschweißen eines Halsringes (15) mit einer am unteren Rand radial nach außen vorstehenden, umlaufenden Bordur (16), deren Durchmesser (D2) kleiner ist als der Durchmesser (D1) des Faßkörpers (2), auf den kalibrierten Schnittrand (10) des Faßkörpers (2) zur Herstellung von Weithalsfässern (17), Glätten der Schweißnaht (18) zwischen Faßkörper (2) und Halsring (15), Dichtheitsprüfung des Faßkörpers (2) und Befestigen eines Weithalsfaßdeckels (19) oder eines Spunddeckels mit einem Deckelflansch (21) am unteren Deckelrand auf dem auf den Faßkörper (2) aufgeschweißten Halsring (15) mit einem Spannring (20).

2. Verfahren nach Anspruch 1, dadurch gekennzeichnet, daß der durch das Abtrennen des oberen Bodens (4) gebildete Schnittrand (10) des Faßkörpers (2) durch Schälen oder Fräsen für das anschließende Verschweißen mit einem oberen Boden (4) oder einem Halsring (15) glattbearbeitet wird.

3. Verfahren nach Anspruch 1 und 2, dadurch gekennzeichnet, daß der gereinigte Faßkörper (2) mit dem für eine Schweißung bearbeiteten Schnittrand (10) auf einen Kalibrierdorn (12) aufgeschoben und im Bereich des Schnittrandes (10) erhitzt wird, derart, daß der Faßkörper (2) beim anschließenden Abkühlen mit dem Schnittrandabschnitt (13) paßgenau auf den Kalibrierdorn (12) aufschrumpft.

**4.** Verfahren nach einem der Ansprüche 1 bis 3, dadurch gekennzeichnet, daß die durch das Aufschweißen eines oberen Bodens (4) oder eines Halsringes (15) auf den Faßkörper (2) gebildete Schweißnaht (18) durch Fräsen oder Schälen von außen geglättet wird.

**5.** Verfahren nach einem der Ansprüche 1 bis 4, dadurch gekennzeichnet, daß beim Rekonditionieren von Spundfässern (1) für eine Weiterverwendung als Weithalsfässer (17) ein Inliner (29) aus einer Kunststoffolie, z.B. einer Polyethylenfolie, oder einer Metall-Kunststoffverbundfolie, z.B. einer einseitig mit Polyethylen kaschierten Aluminiumfolie, in den Faßkörper (2) eingelegt und über den Öffnungsrand (30) des auf den Faßkörper (2) aufgeschweißten Halsringes (15) nach außen umgeschlagen wird, anschließend auf den Faßkörper (2) ein Weithalsfaßdeckel (19) aus Kunststoff mit einer Innenauskleidung (31) aus ein Metall-Kunststoffverbundfolie, z.B. einer einseitig mit Polyethylen kaschierten Aluminiumfolie, aufgesetzt und mit einem Spannring (20) verschlossen wird und darauffolgend der nach außen umgeschlagene obere Rand (32) des Inliners (29) und die Innenauskleidung (31) des Deckels (19) im Bereich des Öffnungsrandes (30) des Faßkörpers (2) durch Induktionsschweißung umlaufend miteinander verschweißt werden.

**6.** Verfahren nach einem der Ansprüche 1 bis 4, dadurch gekennzeichnet, daß beim Redkonditionieren von Spundfässern (1) für eine Weiterverwendung als Weithalsfässer (17) ein Inliner (29) aus einer Kunststoffolie, z.B. einer Polyethylenfolie, in den Faßkörper (2) eingelegt und über den Öffnungsrand (30) des auf den Faßkörper (2) aufgeschweißten Halsringes (15) nach außen umgeschlagen wird, anschließend auf den Faßkörper (2) ein Weithalsfaßdeckel (19) aus Kunststoff mit einer Innenauskleidung (31) aus einer Kunststoffolie, z.B. einer Polyethylenfolie, und einem zwischen dem Dichtring (28) und der Innenauskleidung (31) des Deckels (19) eingesetzten, dünnen Metallring (33) aufgesetzt und mit einem Spannring (20) verschlossen wird und darauffolgend der nach außen umgeschlagene obere Rand (32) des Inliners (29) und die Innenauskleidung (31) des Deckels (19) im Bereich des Öffnungsrandes (30) des Faßkörpers (2) durch Induktionsschweißung umlaufend miteinander verschweißt werden.

**7.** Verfahren nach Anspruch 6, dadurch gekennzeichnet, daß vor dem Aufsetzen des Deckels (19) auf den Faßkörper (2) ein weiterer Metallring (34) auf den Öffnungsrand (30) des Faßkörpers (2) aufgelegt und der obere Rand (32) des Inliners (29) über den Metallring (34) nach außen umgeschlagen wird.

**Claims**

**1.** Method for reconditioning standard plastic drums with screw caps, which drums are produced in one piece by means of blow moulding or comprise a blow moulded drum body with an upper plate, which is welded on and injection moulded, for re-use as screw-cap drums or for use as wide-necked drums, the reconditioned screw-cap and wide-necked drums having the same nominal volume and the same height and diameter dimensions according to DIN standard, characterised by the following features:

a) mechanical separation of the upper drum plate (4), transversely relative to the drum longitudinal axis (7-7), from the drum body (2), the separation cut (8), in the case of screw-cap drums (1) which have a welded-on upper plate (4), being set below the weld seam (9);

b) processing of the annular cut edge (10) of the drum body (2) in order to produce a smooth weld face;

c) cleaning of the drum body (2);

d) calibration of the cut edge (10) of the drum body (2);

e 1) welding of an upper plate (4), which has a filling and withdrawal screw cap (5) as well as a breather and venting screw cap (6), onto the calibrated cut edge (10) of the drum body (2) in order to produce screw-cap drums (1), smoothing of the weld seam and testing for leak-tightness of the screw-cap drum (1);

e 2) welding of a neck ring (15) with a circumferential rim which projects radially outwards at the lower edge, the diameter (D2) of which rim is smaller than the diameter (D1) of the drum body (2), onto the calibrated cut edge (10) of the drum body (2) in order to produce wide-necked drums (17), smoothing of the weld seam (18) between drum body (2) and neck ring (15), leak-tightness testing of the drum body (2) and by means of a tension ring (20), fixing of a wide-necked drum lid (19) or of a screw-cap lid with a lid flange (21) on the lower lid edge on the neck ring (15) which is welded onto the drum body (2).

**2.** Method according to claim 1, characterised in that the cut edge (10) of the drum body (2), which cut edge is formed by means of separation of the upper plate (4), is machined smooth by means of paring or milling for the subsequent welding to an upper plate (4) or to a neck ring (15).

3. Method according to claim 1 and 2, characterised in that the cleaned drum body (2) with the cut edge (10), which is processed for welding, is slid onto a calibrating mandrel (12) and is heated in the region of the cut edge (10) in such a manner that, during subsequent cooling, the drum body (2) with the cut edge portion (13) shrinks to fit exactly onto the calibrating mandrel (12).

4. Method according to one of the claims 1 to 3, characterised in that the weld seam (18), which is formed by welding an upper plate (4) or a neck ring (15) onto the drum body (2), is machined smooth externally by means of milling or paring.

5. Method according to one of the claims 1 to 4, characterised in that, when reconditioning screw-cap drums (1) for further use as wide-necked drums (17), an inner liner (29) made of a plastic film, for example a polyethylene film, or a combined metal-plastic film, for example an aluminium film which is laminated on one side with polyethylene, is inserted in the drum body (2) and is turned down towards the outside over the opening edge (30) of the neck ring (15) which is welded onto the drum body (2), subsequently a wide-necked drum lid (19), which is made of plastic and has an inner lining (31), which is made of a combined metal-plastic film, for example an aluminium film laminated on one side with polyethylene, is placed on the drum body (2) and sealed with a tension ring (20), and thereafter, the upper edge (32) of the inner liner (29), which is turned down towards the outside and the inner lining (31) of the lid (19) are welded together circumferentially in the region of the opening edge (30) of the drum body (2) by means of induction welding.

6. Method according to one of the claims 1 to 4, characterised in that, when reconditioning screw-cap drums (1) for a further use as wide-necked drums (17), an inner liner (29) made of a plastic film, for example a polyethylene film, is inserted in the drum body (2) and is turned down towards the outside over the opening edge (30) of the neck ring (15) which is welded onto the drum body (2), subsequently a wide-necked drum lid (19), which is made of plastic and has an inner lining (31), which is made of a plastic film, for example a polyethylene film, and has a thin metal ring (33) which is inserted between the sealing ring (28) and the inner lining (31) of the lid (19) is placed on the drum body (2) and is sealed with a tension ring (20) and thereafter the upper edge (32) of the inner liner (29), which is turned down towards the outside, and the inner lining (31) of the lid (19) are welded together circumferentially in the region of the opening edge (30) of the drum body (2) by means of induction welding.

7. Method according to claim 6, characterised in that, before placing the lid (19) on the drum body (2), a further metal ring (34) is placed on the opening edge (30) of the drum body (2) and the upper edge (32) of the inner liner (29) is turned down towards the outside over the metal ring (34).

**Revendications**

1. Procédé pour le reconditionnement de fûts à bonde normalisés en matière plastique, qui sont fabriqués d'un seul tenant par soufflage ou qui sont constitués d'un corps de fût formé par soufflage et d'un fond supérieur moulé par injection et soudé sur le corps, en vue de leur réutilisation comme fûts à bonde ou d'une utilisation comme fûts à goulot large, les fûts à bonde et à goulot large reconditionnés possédant un volume nominal identique et des dimensions de hauteur et de diamètres identiques, suivant la norme DIN, **caractérisé** par les caractéristiques suivantes :

a) séparation mécanique du fond (4) supérieur de fût du corps (2) de fût transversalement à l'axe (7-7) longitudinal du fût, la coupe (8) de séparation étant située, pour des fûts (1) à bonde à fond (4) supérieur soudé, en dessous du cordon (9) de soudure ;
b) usinage du bord (10) annulaire de coupe du corps (2) de fût, afin de réaliser une face de soudure lisse ;
c) nettoyage du corps (2) de fût ;
d) calibrage du bord (10) de coupe du corps (2) de fût ;

e1) soudage d'un fond (4) supérieur, doté d'une bonde (5) de remplissage et de soutirage ainsi que d'une bonde (6) d'aération et de purge d'air, sur le bord (10) de coupe calibré du corps (2) de fût, afin de réaliser des fûts (1) à bonde, lissage du cordon de soudure et contrôle de l'étanchéité du fût (1) à bonde;
e2) soudage d'une bague (15) de goulot, dotée d'une bordure (16) entourante dépassant radialement vers l'extérieur sur le bord inférieur et dont le diamètre (D2) est inférieur au diamètre (D1) du corps 2 de fût, sur le bord (10) de coupe calibré du corps (2) de fût, afin de réaliser des fûts (17) à goulot large, lissage du cordon (18) de soudure entre le corps (2) de fût et la bague (15) de goulot, contrôle de l'étanchéité du corps (2) de fût et fixation, à l'aide d'une bague (20) de serrage, d'un couvercle (19) de fût à goulot large ou d'un couvercle à bonde, doté d'une bride (21) de couvercle sur le bord inférieur du couvercle, sur la bague (15) de goulot soudée sur le corps (2) de fût.

**2.** Procédé suivant la revendication 1, **caractérisé** en ce que le bord (10) de coupe du corps (2) de fût, formé par la séparation du fond (4) supérieur, est lissé par décolletage ou fraisage en vue du soudage ultérieur avec un fond (4) supérieur ou une bague (15) de goulot.

**3.** Procédé suivant la revendication 1 ou 2, **caractérisé** en ce que le corps (2) de fût nettoyé, pourvu du bord (10) de coupe usiné en vue d'un soudage, est enfilé sur un mandrin (12) de calibrage et, dans la région du bord (10) de coupe, est chauffé de telle sorte que le corps (2) de fût, lors du refroidissement consécutif, se frette en ajustement serré sur le mandrin (12) de calibrage par la partie (13) de bord de coupe.

**4.** Procédé suivant l'une des revendications 1 à 3, **caractérisé** en ce que le cordon (18) de soudure formé par le soudage sur le corps (2) de fût d'un fond (4) supérieur ou d'une bague (15) de goulot est lissé par fraisage ou décolletage de l'extérieur.

**5.** Procédé suivant l'une des revendications 1 à 4, **caractérisé** en ce que, lors du reconditionnement de fûts (1) à bonde pour une réutilisation comme fûts (17) à goulot large, un revêtement (29) intérieur, constitué d'un film de matière plastique, par exemple un film de polyéthylène, ou d'un film de composite métal-plastique, par exemple un film d'aluminium doublé de polyéthylène sur une face, est mis en place dans le corps (2) de fût, et rabattu vers l'extérieur sur le bord (30) d'ouverture de la bague (15) de goulot soudée sur le corps (2) de fût, à la suite de quoi un couvercle (19) de fût à goulot large en matière plastique, pourvu d'un habillage (31) intérieur en film composite métal-plastique, par exemple en film d'aluminium doublé de polyéthylène sur une face, est posé sur le corps (2) de fût et fermé à l'aide d'une bague (20) de serrage, puis le bord (32) supérieur, rabattu vers l'extérieur, du revêtement (29) intérieur et l'habillage (31) intérieur du couvercle (19) sont, dans la région du bord (30) d'ouverture du corps (2) de fût, mutuellement assemblés par soudage par induction sur toute la circonférence.

**6.** Procédé suivant l'une des revendications 1 à 4, **caractérisé** en ce que lors du reconditionnement de fûts (1) à bonde pour une réutilisation comme fûts (17) à goulot large, un revêtement (29) intérieur, constitué d'un film de matière plastique, par exemple un film de polyéthylène, est mis en place dans le corps (2) de fût, et rabattu vers l'extérieur sur le bord (30) d'ouverture de la bague (15) de goulot soudée sur le corps (2) de fût, à la suite de quoi un couvercle (19) de fût à goulot large en matière plastique, pourvu d'un habillage (31) intérieur en film de matière plastique, par exemple en film de polyéthylène, et d'une mince bague (33) métallique insérée entre la bague (28) d'étanchéité et l'habillage (31) intérieur du couvercle (19), est posé sur le corps (2) de fût et fermé à l'aide d'une bague (20) de serrage, puis le bord (32) supérieur, rabattu vers l'extérieur, du revêtement (29) intérieur et l'habillage (31) intérieur du couvercle (19) sont, dans la région du bord (30) d'ouverture du corps (2) de fût, mutuellement assemblés par soudage par induction sur toute la circonférence.

**7.** Procédé suivant la revendication 6, **caractérisé** en ce que, avant la pose du couvercle (19) sur le corps (2) de fût, une bague (34) métallique supplémentaire est posée sur le bord (30) d'ouverture du corps (2) de fût, et le bord (32) supérieur du revêtement (29) intérieur est rabattu vers l'extérieur sur la bague (34) métallique.

# Fig. 1

Fig. 3

Fig. 2

Fig. 5

Fig. 4

## Fig. 6

## Fig. 7

# Fig. 8